# EUROPÄISCHE PATENTSCHRIFT

(11) **EP 4 015 863 B1**
(45) Veröffentlichungstag und Bekanntmachung des Hinweises auf die Patenterteilung: **22.07.2026**
(21) Anmeldenummer: 21201528.3
(22) Anmeldetag: 07.10.2021
(51) Int. Cl.: F16F 1/38, F16F 1/373

(54) **VORRICHTUNG ZUM LAGERN MINDESTENS EINES BAUTEILS IN EINEM FAHRZEUG UND FAHRZEUG ODER FAHRZEUGELEMENT UMFASSEND DIESE VORRICHTUNG**
MOUNTING DEVICE FOR AT LEAST ONE COMPONENT IN A VEHICLE AND VEHICLE OR VEHICLE ELEMENT COMPRISING THIS DEVICE
DISPOSITIF DE SUPPORT POUR AU MOINS UN COMPOSANT DANS UN VÉHICULE ET VÉHICULE OU ÉLÉMENT DE VÉHICULE COMPRENANT LEDIT DISPOSITIF

(30) Priorität: 21.12.2020 DE 102020134377
(43) Veröffentlichungstag der Anmeldung: 22.06.2022
(73) Patentinhaber: Vibracoustic SE, 69469 Weinheim (DE)
(72) Erfinder: Mueller, Niklas, 79241 Ihringen (DE); Fricker, Tim, 79206 Breisach am Rhein (DE)
(74) Vertreter: Patentanwälte Olbricht Buchhold Keulertz

(56) Entgegenhaltungen:
- WO-A1-2019/202217
- DE-A1- 102010 039 621
- DE-A1- 102016 117 315
- DE-A1- 102018 131 998
- DE-B3- 102017 126 156
- JP-A- H08 121 528
- JP-U- H04 110 247
- US-A1- 2017 144 594
- US-A1- 2019 061 512
- US-A1- 2020 217 362

## Beschreibung

Die Erfindung betrifft eine Vorrichtung zum Lagern mindestens eines Bauteils in einem Fahrzeug sowie ein Fahrzeug oder Fahrzeugelement umfassend diese Vorrichtung.

In Fahrzeugen können Bauteile mit Lagerträgern an ein Fahrzeug oder Fahrzeugteil montiert werden. Wenn diese Bauteile während ihres Betriebs Vibrationen verursachen können, sei es durch eine Krafteinwirkung von außen, sei es durch ihren Betrieb, werden die Lagerträger derart an die Fahrzeuge angebunden, dass die Bauteile vibrationstechnisch von dem Fahrzeug entkoppelt sind. Eine wirksame Entkopplung von hochfrequenten Schwingungen wird erreicht, wenn niedrigdämpfende Elemente verwendet werden.

Dazu ist aus JP H04 110247 U eine flüssigkeitsgefüllte zylindrische Halterung mit einem Anschlagelement bekannt. Ferner ist aus DE 10 2017 126 156 B3 eine Lagervorrichtung bekannt, die zur schwingfähigen Lagerung ausgebildet ist und Schwingungen zwischen einem Bauteil und einem Fahrzeugelement entkoppelt. Zwischen dem Bauteil und dem Fahrzeugelement ist eine Spiralfeder angeordnet, die Schwingungen zwischen dem Bauteil und dem Fahrzeug entkoppelt. Das Bauteil stützt sich auf der Spiralfeder an dem Fahrzeug ab. Die Spiralfeder ist mit dem Fahrzeug verbunden und überträgt Lasten über ein als Hülse ausgebildetes Gleitelement an ein Elastomerelement, das mit dem Bauteil verbunden ist. Typischerweise ist die Spiralfeder aus Stahl.

Die Abstimmung von radialer zu axialer Steifigkeit von Stahlfedern kann herausfordernd sein und niedrigdämpfende Stahlfedern bei hochfrequenten Anregungen zur Ausbildung von Eigenmoden neigen, die Steifigkeitpeaks erzeugen. Daher besteht Bedarf an einer Vereinfachung der Entkopplung.

Bei der Verwendung von Elastomerfedern anstelle der Stahlfedern wird für die sichere Übertragung von Lasten in der Regel eine Zusatzhülse benötigt. Die Verbindung zwischen der Elastomerfeder und der Zusatzfeder wird in der Regel über Stoffschluss hergestellt. Dies erfordert allerdings eine aufwändige Herstellung.

Aufgabe der Erfindung ist es daher, eine Vorrichtung zum Lagern mindestens eines Bauteils in einem Fahrzeug bereitzustellen, die einfach herzustellen und kostengünstig ist.

Hauptmerkmale der Erfindung sind in den Ansprüchen 1 und 16 angegeben. Ausgestaltungen sind Gegenstand der Ansprüche 2 bis 15 und 17.

In einem ersten Aspekt der Erfindung ist eine Vorrichtung zum Lagern mindestens eines Bauteils in einem Fahrzeug vorgesehen, umfassend: mindestens ein Stützteil zum Abstützen der Vorrichtung an dem Fahrzeug oder einem Fahrzeugelement, wobei das Stützteil ein erstes Endstück und ein zweites Endstück, der dem ersten Endstück entlang einer Längsachse des Stützteils gegenüberliegt, aufweist, wobei das Stützteil am zweiten Endstück ein Halteteil zum Verbinden mit einem Dämpfungselement aufweist; mindestens eine Lageraufnahme zum Aufnehmen des Bauteils, der einen Verbindungsbereich zum Verbinden mit einem Anschlagelement aufweist und in einer in Bezug auf die Längsachse radialen Richtung von dem Stützteil beabstandet angeordnet ist; mindestens ein in der radialen Richtung zwischen der Lageraufnahme und dem Stützteil angeordnetes Anschlagelement, das an dem Verbindungsbereich befestigt ist und eine zum Stützteil hin gewandte Anschlagfläche umfasst; und mindestens ein Dämpfungselement zum Dämpfen von Vibrationen, das an dem Anschlagelement und dem Halteteil befestigt ist; wobei das Anschlagelement mittels des Dämpfungselements in Bezug auf die Längsachse in der radialen Richtung und einer axialen Richtung beweglich zum Stützteil gelagert ist.

Gemäß der Erfindung wird damit eine Vorrichtung zum Lagern mindestens eines Bauteils in einem Fahrzeug bereitgestellt, bei der das Dämpfungselement lediglich die Entkopplung zwischen dem Bauteil und dem Fahrzeug bewirkt und das Anschlagelement die Verbindung zwischen der Lageraufnahme und dem Dämpfungselement herstellt. Die Funktionen des Dämpfens und der sicheren Verbindung des Dämpfungselements mit der Lageraufnahme sind damit auf zwei verschiedene Elemente aufgeteilt. Das Dämpfungselement ist mit einem Stützteil verbunden, das die Vorrichtung an einem Fahrzeug bzw. Fahrzeugelement abstützt. Ein erstes Endstück des Stützteils ist mit dem Fahrzeug bzw. Fahrzeugelement verbunden und ein dem ersten Endstück gegenüberliegendes zweites Endstück des Stützteils ist mit dem Dämpfungselement verbunden. Das Dämpfungselement ist über ein Anschlagelement mit einer Lageraufnahme zum Aufnehmen des Bauteils verbunden. Das Anschlagelement wird dabei mittels des Dämpfungselements in einer radialen Richtung und in einer axialen Richtung hinsichtlich einer Längsachse des Stützteils, die sich zwischen dem ersten und dem zweiten Endstück erstreckt, beweglich zum Stützteil gelagert. D.h., dass das Anschlagelement mit der Lageraufnahme in axialer und in radialer Richtung hinsichtlich der Längsachse schwingen kann. Dabei ist das Anschlagelement in der radialen Richtung zwischen der Lageraufnahme und dem Stützteil angeordnet und umfasst eine zu dem Stützteil gewandte Anschlagfläche. Wenn daher das Bauteil mit der Lageraufnahme und dem Anschlagelement in radialer Richtung das Stützteil bei einer Schwingung kontaktiert, schlägt die Anschlagfläche des Anschlagelements auf dem Stützteil auf. Die bei dem Aufschlag entstehenden Kräfte werden durch das Anschlagelement aufgenommen. Vorzugsweise ist die Steifigkeit des Dämpfungselements niedrig, sodass hochfrequente Schwingungen des Bauteils, insbesondere in axialer Richtung, durch das Dämpfungselement vollständig oder nahezu vollständig gedämpft werden. Es wird damit eine Vorrichtung zum Lagern mindestens eines Bauteils in einem Fahrzeug bereitgestellt, die einfach herzustellen und kostengünstig ist.

Das Anschlagelement bewirkt damit einen Anschlag in jeder radialen Richtung zur Längsachse zwischen dem Stützteil und der Lageraufnahme. Das Anschlagelement hat dabei genügend Spiel, um zunächst ohne Anschlag an dem Stützteil eine Bewegung in radialer Richtung durchzuführen. Damit werden die Lageraufnahme und das Dämpfungselement vor Schäden durch starke Vibrationen bzw. Stöße geschützt.

Gemäß einem Beispiel kann das Dämpfungselement als Elastomerformteil ausgebildet sein.

Elastomerformteile sind einfach und kostengünstig herstellbar. Weiter ist die Einstellung der axialen und radialen Steifigkeit bei Elastomerformteilen deutlich einfacher durchführbar als bei Stahlfedern. Insbesondere axiale Schwingungen können durch Elastomerformteile mit niedriger axialer Steifigkeit nahezu vollständig gedämpft werden.

Gemäß der Erfindung weist der Verbindungsbereich ein Wandelement auf, wobei das Dämpfungselement zumindest teilweise zwischen dem Anschlagelement und dem Wandelement geklemmt ist.

Durch das Anordnen des Dämpfungselements zwischen dem Wandelement und dem Anschlagelement kann eine sichere Montage des Dämpfungselements an der Vorrichtung bewirkt werden. Weiter wird damit ein Schutz vor Überlast bewirkt. Insbesondere, wenn das Dämpfungselement zwischen dem Wandelement und dem Anschlagelement geklemmt ist, ist eine betriebssichere Montage ermöglicht. Das Anschlagelement bewirkt damit nicht lediglich die Verbindung zwischen dem Dämpfungselement und der Lageraufnahme, sondern zusätzlich die Befestigung des Dämpfungselements an der Lageraufnahme. Beispielsweise kann sich das Wandelement parallel zur Längsachse erstrecken oder konisch oder in einer ähnlichen Weise zur Längsachse angeordnet sein.

Weiter kann sich das Wandelement zum Beispiel um die Längsachse erstrecken. Das Wandelement kann damit ringförmig ausgebildet sein und sich um das Anschlagelement und das zwischen dem Anschlagelement und dem Wandelement angeordnete Dämpfungselement erstrecken.

Gemäß einem anderen Beispiel ist denkbar, dass das Anschlagelement zwischen dem Halteteil und dem ersten Endstück angeordnet sein kann, wobei sich das Dämpfungselement am Halteteil von dem Anschlagelement weg und danach zumindest teilweise in einem Bogen zum Anschlagelement erstreckt.

Das Dämpfungselement kann damit z. B. ein oder mehrere Bänder aufweisen oder als Schlauchteil hergestellt werden, wobei ein Teil jedes Bands umgebogen wird bzw. ein Teil des Schlauchteils nach innen umgeklappt wird. Ein Ende des Schlauchteils wird dann an dem Stützteil befestigt, das andere am Anschlagelement. Das Anschlagelement kann damit hängend an dem Dämpfungselement an dem Stützteil befestigt werden. Das Dämpfungselement kann auf diese Weise besonders effektiv axiale und radiale Schwingungen des Anschlagelements bzw. der daran befestigten Lageraufnahme mit dem Bauteil aufnehmen.

Weiter kann das Anschlagelement zum Beispiel eine erste Durchgangsöffnung aufweisen, durch die sich das Stützteil erstreckt und an der die Anschlagfläche angeordnet ist.

Das Anschlagelement erstreckt sich dann um die Längsachse und damit auch um das Stützteil. Das Anschlagelement kann damit z. B. ringförmig aufgebaut sein. Gleichzeitig kann sich beispielsweise auch die Lageraufnahme um die Längsachse und das Stützteil erstrecken. Gleiches gilt für das Dämpfungselement. Damit weist die Vorrichtung einen einfachen Aufbau auf.

Das Dämpfungselement kann beispielsweise eine zweite Durchgangsöffnung aufweisen, wobei die zweite Durchgangsöffnung mit der ersten Durchgangsöffnung zumindest teilweise überlappend angeordnet ist und das Stützteil sich durch die erste Durchgangsöffnung und die zweite Durchgangsöffnung erstreckt.

Durch die Überlappung der ersten Durchgangsöffnung mit der zweiten Durchgangsöffnung kann das Stützteil durch beide Durchgangsöffnungen durchgeführt werden. An der zweiten Durchgangsöffnung ist dann das Stützteil befestigt, sodass das Dämpfungselement zwischen der ersten Durchgangsöffnung und der zweiten Durchgangsöffnung eine Verbindung zwischen dem Anschlagelement und dem Stützteil erstellt.

Gemäß einem weiteren Beispiel kann die Anschlagfläche mindestens ein Rippenelement aufweisen, das in radialer Richtung zum Stützteil gerichtet ist.

Weiter kann das Anschlagelement eine Vielzahl von Rippenelementen aufweisen, die eine Kronenkontur am Anschlagelement bilden können. Durch die Verwendung mindestens eines Rippenelements kann bei einem Anschlag die Geräuschentwicklung reduziert werden. Weiter wird ein punktueller Anschlag an der Anschlagfläche bereitgestellt. Der Auftreffpunkt des Stützteils an der Anschlagfläche kann damit durch das mindestens ein Rippenelement zumindest an der Position des Rippenelements kontrolliert und vordefiniert werden.

Gemäß einem weiteren Beispiel kann das Rippenelement einen ersten abgeflachten Endbereich und einen zweiten abgeflachten Endbereich aufweisen und sich parallel zur Längsachse zwischen dem ersten abgeflachten Endbereich und zweiten abgeflachten Endbereich erstrecken.

Das Rippenelement ist damit bauchig ausgebildet. An den beiden abgeflachten Endbereichen ragt das Rippenelement weniger in Richtung des Stützteils als zwischen den beiden abgeflachten Endbereichen. Damit wird an den Endbereichen ein zusätzlicher Freiweg geschaffen, der bei einer Taumelbewegung des Dämpfungselements bzw. des Anschlagelements der Lageraufnahme die Anzahl der Anschläge des Anschlagelements an dem Stützteil reduziert.

Weiter kann das Rippenelement sich zumindest teilweise in Richtung der Längsachse erstrecken. In einem anderen Beispiel kann mindestens ein Rippenelement quer zur Längsachse angeordnet sein. In diesem Fall kann sich das Rippenelement um die Längsachse erstrecken und ringförmig sein.

Das Stützteil kann zum Beispiel als Hülse ausgebildet sein, die sich entlang der Längsachse erstreckt und durch die ein Befestigungselement zum Verbinden mit dem Fahrzeug oder Fahrzeugelement durchführbar ist.

Das Befestigungselement kann dabei zum Beispiel als Schraube ausgebildet werden, die in das Fahrzeug bzw. das Fahrzeugelement einschraubbar ist. Das Stützteil wird dann durch das Befestigungselement an dem Fahrzeug bzw. das Fahrzeugelement befestigt.

Die Hülse kann in einem anderen Beispiel ein Innengewinde aufweisen, durch das von der Unterseite eine Schraube als Befestigungselement eingedreht wird.

In diesem Beispiel weist das Fahrzeug bzw. das Fahrzeugelement lediglich eine Durchgangsöffnung auf, durch die das Befestigungselement hindurchgeführt wird, um auf der anderen Seite mit dem Stützteil verbunden zu werden. Die Verbindung erfolgt hierbei durch das Einschrauben des Befestigungselements in das Stützteil.

Gemäß einem anderen Beispiel kann das Stützteil als Bolzen ausgebildet sein, der mit dem Fahrzeug oder Fahrzeugelement verbindbar ist.

Das Stützteil kann in diesem Beispiel an einem Endbereich ein Gewinde haben, das durch eine passende Öffnung an dem Fahrzeug oder dem Fahrzeugelement durchgetaucht wird und das mittels einer Mutter verschraubt werden kann.

Alternativ oder zusätzlich kann der Stützteil in diesem Beispiel direkt in einer Öffnung mit einem Innengewinde des Fahrzeugs oder des Fahrzeugelements eingeschraubt werden.

Weiter ist denkbar, dass das Dämpfungselement formschlüssig, kraftschlüssig und/oder stoffschlüssig mit dem Halteteil verbunden sein kann.

Das Dämpfungselement kann dabei vorzugsweise unlösbar mit dem Halterteil verbunden sein. Bei einer formschlüssigen Verbindung kann das Dämpfungselement zum Beispiel eine Nut aufweisen, die über einen Flansch des Stützteils gelegt wird. Bei einer stoffschlüssigen Verbindung kann das Dämpfungselement zum Beispiel durch eine Verklebung oder ein Anvulkanisieren mit dem Stützteil verbunden sein. Eine kraftschlüssige Verbindung kann zum Beispiel über eine Klemmung zwischen dem Stützteil und dem Dämpfungselement hergestellt werden.

Ebenfalls ist denkbar, dass das Halteteil und/oder das Dämpfungselement mindestens eine Formschlussöffnung zum Erzeugen einer formschlüssigen Verbindung zwischen dem Halteteil und dem Dämpfungselement aufweisen können.

Wenn zum Beispiel das Dämpfungselement eine Formschlussöffnung aufweist, kann zum Beispiel ein Stift des Halteteils in die Formschlussöffnung einführbar sein und auf diese Weise einen Formschluss quer zur Formschlussöffnung herstellen. Damit wird auf einfache Weise eine sichere Montage des Dämpfungselements an dem Halteteil bewirkt.

Gemäß einem weiteren Beispiel kann das Halteteil als Scheibe und das Stützteil als Buchse und/oder Hülse ausgebildet sein.

Dabei kann das Dämpfungselement zunächst mit der Scheibe verbunden werden und danach mit der Hülse bzw. der Buchse des Stützteils verbunden werden. Weiter kann in diesem Beispiel das Stützteil eine Buchse bzw. eine Hülse an dem Fahrzeug bzw. dem Fahrzeugelement aufweisen. Die Scheibe des Halteelements muss damit lediglich mit der Buchse bzw. der Hülse verbunden werden, um eine Befestigung an dem Fahrzeug zu bewirken. Weiter wird damit die Montage vereinfacht.

Weiter kann das Halteteil in das Stützteil integriert sein.

In diesem Beispiel kann das Halteteil als Flansch am Stützteil ausgebildet sein.

Das Stützteil kann weiter eine Elastomerschicht aufweisen, die zwischen dem Stützteil und dem Anschlagelement angeordnet ist.

Auf diese Weise kann ein weicher Übergang zwischen dem Anschlagelement und dem Stützteil bewirkt werden, der Geräusche weiter reduziert und das Anschlagen des Anschlagelements dämpft.

In einem weiteren Aspekt betrifft die Erfindung ein Fahrzeug oder Fahrzeugelement umfassend eine Vorrichtung nach der vorhergehenden Beschreibung, wobei das Stützteil mit dem ersten Endstück an dem Fahrzeug oder Fahrzeugelement angeordnet ist.

Vorteile und Wirkungen sowie Weiterbildungen des Fahrzeugs oder Fahrzeugelements ergeben sich aus den Vorteilen und Wirkungen sowie Weiterbildungen der oben beschriebenen Vorrichtung. Es wird daher in dieser Hinsicht auf die vorangegangene Beschreibung verwiesen.

Das Stützteil kann an dem Fahrzeug oder Fahrzeugelement ausgebildet sein.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a-g: eine schematische Schnittdarstellung der Komponenten der Vorrichtung; und
- Fig. 2a-e: schematische Schnittdarstellungen verschiedener Beispiele der Vorrichtung.

Im Folgenden wird die Vorrichtung zum Lagern eines Bauteils Fahrzeug mit dem Referenzzeichen 10 bezeichnet.

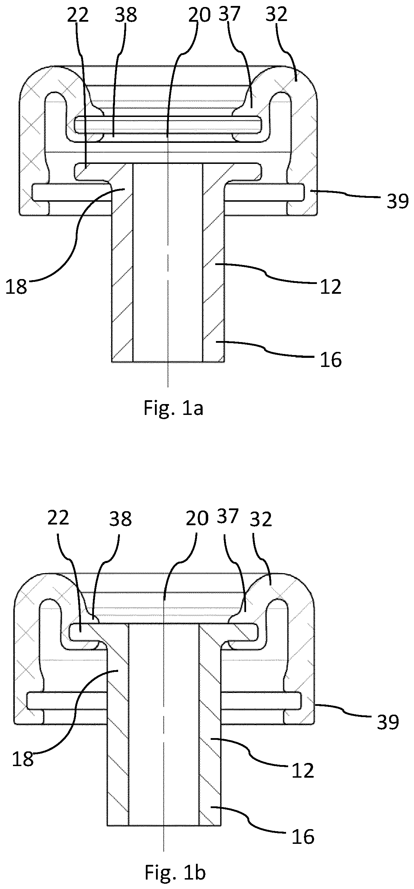

Gemäß der Figuren 1a bis 1g umfasst die Vorrichtung 10 ein Stützteil 12, ein Dämpfungselement 32, ein Anschlagelement 28 und eine Lageraufnahme 24. In Figur 1a sind das Stützteil 12 und das Dämpfungselement 32 dargestellt.

Das Stützteil 12 umfasst dabei ein erstes Endstück 16 und ein zweites Endstück 18, das dem ersten Endstück 16 gegenüberliegt. Weiter ist das Stützteil 12 als Hülse ausgebildet. Das Stützteil 12 erstreckt sich entlang einer Längsachse 20. Eine Öffnung der Hülse 20 erstreckt sich ebenfalls entlang der Längsachse 20.

Am zweiten Endstück 18 ist ein Halteteil 22 angeordnet, das als Flansch ausgebildet ist.

Das Dämpfungselement 32 ist als Elastomerformteil ausgebildet. Es weist eine Durchgangsöffnung 38 auf, die sich ebenfalls um die Längsachse 20 erstreckt, wenn das Dämpfungselement 32 mit dem Stützteil 12 verbunden wird. Das Dämpfungselement 32 umfasst weiter eine Nut, die sich entlang des Randes der Durchgangsöffnung 38 erstreckt. Die Nut ist dazu ausgebildet, den Flansch des Halteteils 22 aufzunehmen.

Weiter weist das Dämpfungselement 32 eine Form auf, deren Querschnitt einen U-förmig Bogen aufweist. Die Durchgangsöffnung 38 des Dämpfungselements 32 ist dabei an einem Schenkel 37 des U-förmigen Bogens angeordnet, der andere Schenkel 39 des U-förmigen Bogens des Dämpfungselements 32 ist zum Verbinden mit dem Anschlagelement 28 ausgebildet. In Figur 1a sind das Dämpfungselement 32 und das Stützteil 12 noch in getrenntem Zustand dargestellt.

In Figur 1b ist das Dämpfungselement 32 mit dem Stützteil 12 verbunden. Dabei ist die Durchgangsöffnung 38 mit der Nut an dem Halteteil 22 befestigt. Es wird eine formschlüssige Verbindung hergestellt.

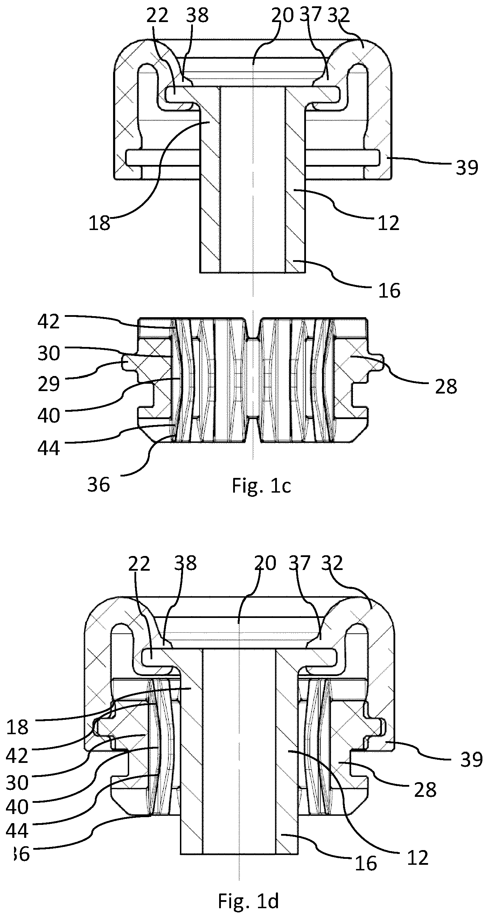

In Figur 1c ist zusätzlich zu dem verbundenen Bauteil aus Figur 1b das Anschlagelement 28 dargestellt. Das Anschlagelement 28 ist in diesem Beispiel ringförmig um die Längsachse 20 ausgebildet, wenn das Anschlagelement 28 mit dem Dämpfungselement 32 verbunden ist.

Das Anschlagelement 28 umfasst eine Durchgangsöffnung 36. Im Folgenden wird die Durchgangsöffnung 36 als erste Durchgangsöffnung und die Durchgangsöffnung 38 als zweite Durchgangsöffnung bezeichnet. An der ersten Durchgangsöffnung 36 ist eine Anschlagfläche 30 angeordnet, die das Anschlagelement 28 gegenüber der ersten Durchgangsöffnung 36 begrenzt. An der Anschlagfläche 30 ist mindestens ein Rippenelement 40 angeordnet, das sich in radialer Richtung bezüglich der Längsachse 20 in die erste Durchgangsöffnung 36 hinein erstreckt.

In diesem Beispiel umfasst das Anschlagelement 28 eine Vielzahl von Rippenelementen 40. Die Vielzahl der Rippenelemente 40 bildet am Anschlagelement 28 eine Kronenform aus.

Die Rippenelemente 40 erstrecken sich in diesem Beispiel alle parallel zur Längsachse 20. Mindestens ein Rippenelement 40 weist dabei einen ersten abgeflachten Endbereich 42 und ein zweiten abgeflachten Endbereich 44 auf, zwischen denen sich das Rippenelement 40 erstreckt. Die Abflachung ist dabei in radialer Richtung zu verstehen, sodass das Rippenelement 40 zwischen den beiden abgeflachten Endbereichen 42, 44 tiefer in die erste Durchgangsöffnung 38 hineinragt als an den beiden abgeflachten Endbereichen 42, 44.

In einem alternativen, nicht dargestellten Beispiel können die Rippenelemente 40 sich um die Längsachse erstrecken.

Weiter umfasst das Anschlagelement 28 einen Flansch 29, der als Feder für eine Nut ausgebildet ist, die am Schenkel 39 des Dämpfungselements 32 angeordnet ist. Über die Nut am Schenkel 39 kann das Dämpfungselement 32 mit dem Flansch 29 des Anschlagelements 28 verbunden werden. Dies ist in Figur 1d dargestellt.

Die Verbindung zwischen dem Anschlagelement 28 und dem Dämpfungselement 32 kann alternativ oder zusätzlich zu dieser formschlüssigen Verbindung, stoffschlüssig oder kraftschlüssig erfolgen.

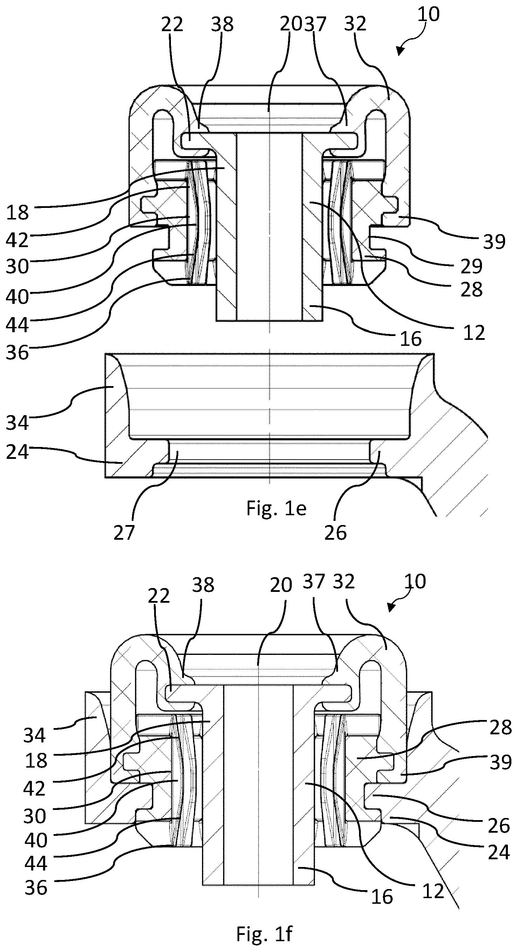

Figur 1e ist zusätzlich zu den verbundenen Komponenten aus Figur 1d ein Teil der Lageraufnahme 24 dargestellt. Die Lageraufnahme 24 umfasst einen Verbindungsbereich 26, der eine Öffnung 27 umfasst, in die die zusammengesetzten Komponenten aus Figur 1d eingeführt werden kann. Insbesondere kann das Anschlagelement 28 in den Verbindungsbereich 26 eingesetzt werden.

Der Verbindungsbereich 26 umfasst weiter ein Wandelement 34, die sich um die Öffnung 27 erstreckt. Alternativ oder zusätzlich kann sich das Wandelement 34 auch lediglich teilweise um die Öffnung 27 erstrecken.

Das Anschlagelement umfasst weiter eine Nut 29, die dazu ausgebildet ist, eine Kante der Öffnung 27 aufzunehmen. Auf diese Weise kann eine formschlüssige Verbindung zwischen dem Anschlagelement 28 den Verbindungsbereich 26 hergestellt werden. Dies ist in Figur 1f dargestellt.

Dabei ist das Dämpfungselement 32 zwischen dem Anschlagelement 28 und dem Wandelement 34 angeordnet. Das Anschlagelement 38 presst den Schenkel 39 des Dämpfungselements 32 an das Wandelement 34. Auf diese Weise kann eine sichere Verbindung zwischen dem Dämpfungselement 32 und der Lageraufnahme 24 über das Anschlagelement 38 bewirkt werden.

Das Anschlagelement 28 ist damit über den Schenkel 39 des Dämpfungselements 32 am Stützteil 12 aufgehängt. Das Anschlagelement 28 kann in axialer Richtung parallel zur Längsachse 20 und in radialer Richtung schwingen. In radialer Richtung wird eine mögliche Bewegung des Anschlagelements 28 und damit der Lageraufnahme 24 durch den Abstand zwischen den Rippenelementen 40 und dem Stützteil 12 definiert. Bei einer radialen Bewegung, die den Abstand überbrückt, schlagen die Rippenelemente 40 an das Stützteil 12 an. Dabei nimmt das Anschlagelement 28 die dabei wirkende Kraft auf, sodass das Dämpfungselement 32, das aus einem weichen Material besteht, nicht beschädigt wird. Um den Anschlag der Rippenelemente 40 an dem Stützteil 12 zu dämpfen, kann das Stützteil 12 eine Elastomerschicht 58 aufweisen.

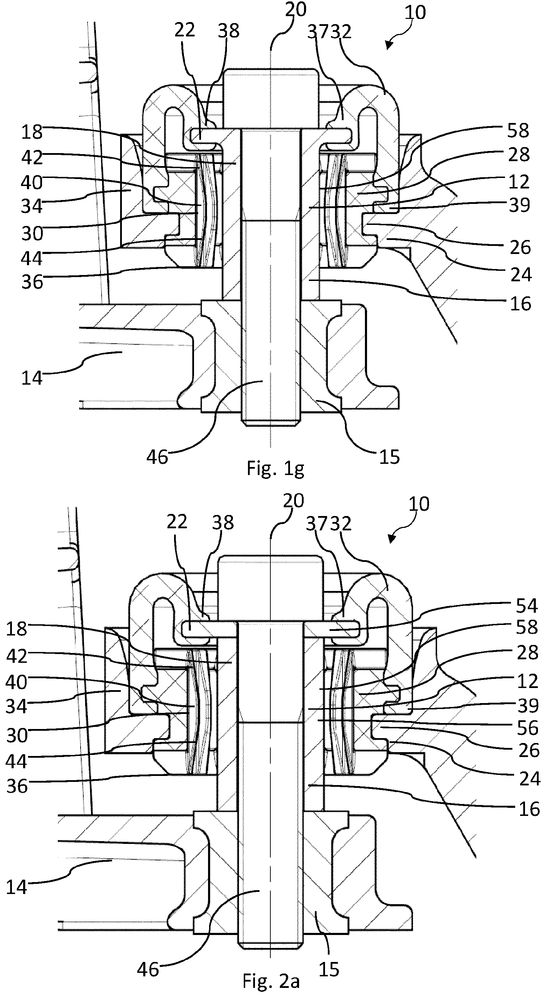

In axialer Richtung ist die Bewegung des Anschlagelements 28 nach oben durch das Dämpfungselement 32 selbst bzw. das Stützteil 12 beschränkt. Nach unten ist die Bewegung des Anschlagelements 28 durch das Fahrzeug bzw. Fahrzeugelement 14 beschränkt, wenn die Vorrichtung 10 mit dem Fahrzeug bzw. Fahrzeugelement 14 verbunden ist. Dies ist in Figur 1g dargestellt.

Dabei ist das zusammengesetzte Bauteil aus Figur 1f in Figur 1g mittels eines Befestigungselements 46 an einem Fahrzeugteil 14 befestigt. Das Befestigungselement 46 ist hierbei als Schraube dargestellt, die durch die Hülse des Stützteils 12 durchgeführt wird und an einem Gewindestück 15 des Fahrzeugs bzw. Fahrzeugteils 14 eingeschraubt ist.

In Figur 2a ist eine weitere Ausführungsform des Stützteils 12 dargestellt. Das Stützteil 12 umfasst eine Hülse 56 und eine Scheibe 54, die getrennt voneinander ausgebildet sind. Die Scheibe 54 wird als Halteteil 22 zunächst mit dem Dämpfungselement 32 verbunden. Damit kann die Montage der Scheibe 54 an dem Dämpfungselement 32 erleichtert werden.

In diesem Beispiel wird es durch das Befestigungselement 46 an die Hülse 56 gedrückt, die weiter durch das Befestigungselement 46 an das Fahrzeugteil 14 gedrückt wird.

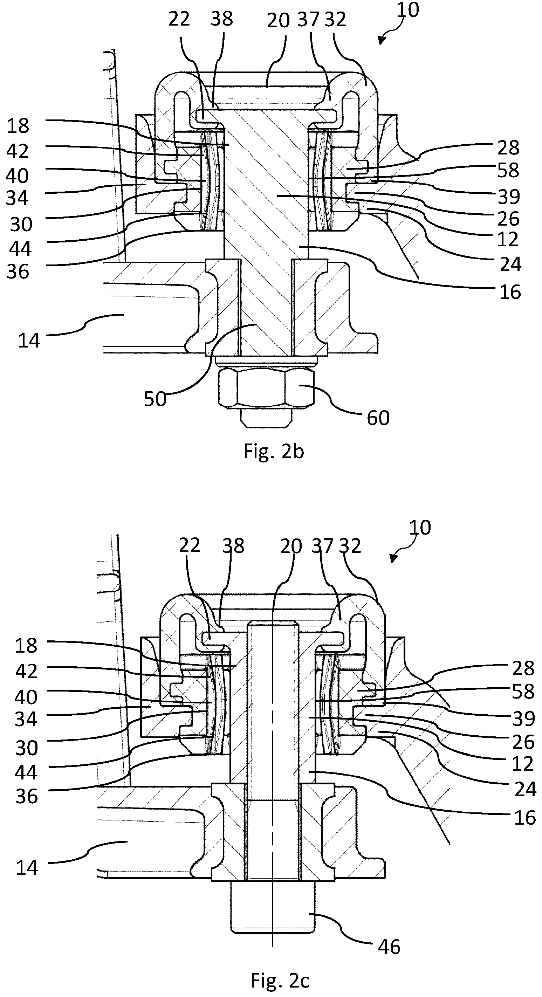

In Figur 2b ist ein weiteres Beispiel des Stützteils 12 dargestellt. Das Stützteil 12 ist hierbei als Bolzen 50 ausgebildet, der ein Außengewinde aufweist, das durch eine Öffnung am Fahrzeugteil 14 durchgesteckt werden kann. Befestigt wird der Bolzen 50 mittels einer Mutter 60, die auf das Außengewinde aufgeschraubt wird.

Figur 2c zeigt ein weiteres Beispiel des Stützteils 12. Das Stützteil 12 ist in diesem Beispiel wie in der Ausführungsform nach den Figuren 1a bis 1g mit einer Durchgangsöffnung ausgestattet. An der Durchgangsöffnung ist ein Innengewinde angeordnet. Das Befestigungselement 46 erstreckt sich in diesem Beispiel von der der Vorrichtung 10 gegenüberliegenden Seite des Fahrzeugteils 14 auf die Seite, an der die Vorrichtung 10 angeordnet ist.

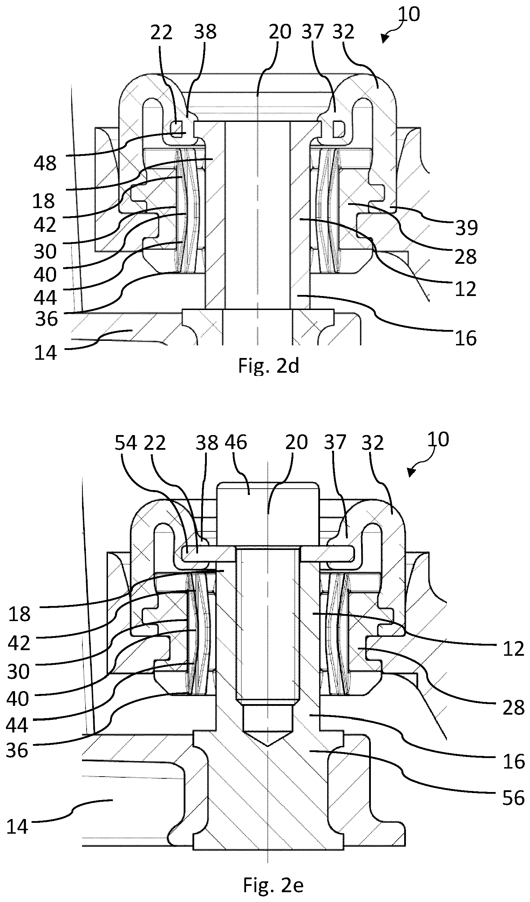

Ein weiteres Beispiel des Stützteils 12 ist in Figur 2d dargestellt. Dabei ist das Stützteil 12 noch nicht mit dem Fahrzeugelement 14 verbunden. Das Stützteil 12 weist am Halteteil 22 mindestens eine Formschlussöffnung 48 auf, in die eine Komponente des Dämpfungselements 32 eingreift, um eine formschlüssige Verbindung zu bewirken.

In Figur 2e ist das Stützteil 12 wie in dem Beispiel nach Figur 2a mit einer Scheibe 54 ausgebildet. Die Hülse 56 aus Figur 2a ist hierbei an dem Fahrzeugelement 14 ausgebildet und fest mit dem Fahrzeugelement 14 verbunden. Die Vorrichtung 10 wird dabei zusammengesetzt, in dem die Scheibe 54 zunächst mit dem Dämpfungselement 32, dem Anschlagelement 28 und der Lageraufnahme 24 verbunden wird. Danach wird die Scheibe auf die fest mit dem Fahrzeugelement 14 verbundene Hülse 56 aufgesetzt und kann dann mittels eines Befestigungselements oder auf andere Weise zum Beispiel mit einer stoffschlüssigen Verbindung mit der Hülse 46 verbunden werden.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 10: Vorrichtung
- 12: Stützteil
- 14: Fahrzeugelement
- 15: Gewindestück
- 16: erstes Endstück
- 18: zweites Endstück
- 20: Längsachse
- 22: Halteteil
- 24: Lageraufnahme
- 26: Verbindungsbereich
- 27: Öffnung
- 28: Anschlagelement
- 29: Nut
- 30: Anschlagfläche
- 32: Dämpfungselement
- 34: Wandelement
- 36: erste Durchgangsöffnung
- 37: Schenkel
- 38: zweite Durchgangsöffnung
- 39: Schenkel
- 40: Rippenelement
- 42: erster abgeflachter Endbereich
- 44: zweiter abgeflachter Endbereich
- 46: Befestigungselement
- 48: Formschlussöffnung
- 50: Bolzen
- 54: Scheibe
- 56: Hülse
- 58: Elastomerschicht
- 60: Hülse

## Patentansprüche

1. Vorrichtung zum Lagern mindestens eines Bauteils in einem Fahrzeug, umfassend:
- mindestens ein Stützteil (12) zum Abstützen der Vorrichtung (10) an dem Fahrzeug oder einem Fahrzeugelement (14), wobei das Stützteil (12) ein erstes Endstück (16) und ein zweites Endstück (18), das dem ersten Endstück (16) entlang einer Längsachse (20) des Stützteils (12) gegenüberliegt, aufweist, wobei das Stützteil (12) am zweiten Endstück (18) ein Halteteil (22) zum Verbinden mit einem Dämpfungselement (32) aufweist;
- mindestens eine Lageraufnahme (24) zum Aufnehmen des Bauteils, die einen Verbindungsbereich (26) zum Verbinden mit einem Anschlagelement (28) aufweist und in einer in Bezug auf die Längsachse (20) radialen Richtung von dem Stützteil (12) beabstandet angeordnet ist;
- mindestens ein in der radialen Richtung zwischen der Lageraufnahme (24) und dem Stützteil (12) angeordnetes Anschlagelement (28) für einen Anschlag in jeder radialen Richtung zur Längsachse (20) zwischen dem Stützteil (12) und der Lageraufnahme (24), das an dem Verbindungsbereich (26) befestigt ist und eine zum Stützteil (12) hin gewandte Anschlagfläche (30) umfasst; und
- mindestens ein Dämpfungselement (32) zum Dämpfen von Vibrationen und zum Entkoppeln des Bauteils von dem Fahrzeug,
wobei das Anschlagelement (28) mittels des Dämpfungselements (32) in Bezug auf die Längsachse (20) in der radialen Richtung und einer axialen Richtung beweglich zum Stützteil (12) gelagert ist, wobei der Verbindungsbereich (26) ein Wandelement (34) aufweist,
**dadurch gekennzeichnet, dass**
das Dämpfungselement (32) an dem Anschlagelement (28) und dem Halteteil (22) befestigt ist, wobei das Anschlagelement (28) die Lageraufnahme (24) und das Dämpfungselement (32) verbindet, wobei das Dämpfungselement (32) zumindest teilweise zwischen dem Anschlagelement (28) und dem Wandelement (34) geklemmt ist, wobei das Anschlagelement (28) das Dämpfungselement (32) an der Lageraufnahme (24) befestigt.

2. Vorrichtung nach Anspruch 1, **dadurch gekennzeichnet, dass** das Dämpfungselement (32) als Elastomerformteil ausgebildet ist.

3. Vorrichtung nach Anspruch 1 oder 2, **dadurch gekennzeichnet, dass** sich das Wandelement (34) um die Längsachse (20) erstreckt.

4. Vorrichtung nach einem der Ansprüche 1 bis 3, **dadurch gekennzeichnet, dass** das Anschlagelement (28) zwischen dem Halteteil (22) und dem ersten Endstück (16) angeordnet ist, wobei sich das Dämpfungselement (32) am Halteteil (22) von dem Anschlagelement (28) weg und danach zumindest teilweise in einem Bogen zum Anschlagelement (28) erstreckt.

5. Vorrichtung nach einem der Ansprüche 1 bis 4, **dadurch gekennzeichnet, dass** das Anschlagelement (28) eine erste Durchgangsöffnung (36) aufweist, durch die sich das Stützteil (12) erstreckt und an der die Anschlagfläche (30) angeordnet ist.

6. Vorrichtung nach Anspruch 5, **dadurch gekennzeichnet, dass** das Dämpfungselement (32) eine zweite Durchgangsöffnung (38) aufweist, wobei die zweite Durchgangsöffnung (38) mit der ersten Durchgangsöffnung (36) zumindest teilweise überlappend angeordnet ist und das Stützteil (12) sich durch die erste Durchgangsöffnung (36) und die zweite Durchgangsöffnung (38) erstreckt.

7. Vorrichtung nach einem der Ansprüche 1 bis 6, **dadurch gekennzeichnet, dass** die Anschlagfläche (30) mindestens ein Rippenelement (40) aufweist, das in radialer Richtung zum Stützteil (12) gerichtet ist.

8. Vorrichtung nach Anspruch 7, **dadurch gekennzeichnet, dass** das Rippenelement (40) einen ersten abgeflachten Endbereich (42) und einen zweiten abgeflachten Endbereich (44) aufweist und sich parallel zur Längsachse (20) zwischen dem ersten abgeflachten Endbereich (42) und zweiten abgeflachten Endbereich (44) erstreckt.

9. Vorrichtung nach einem der Ansprüche 1 bis 8, **dadurch gekennzeichnet, dass** das Stützteil (12) als Hülse ausgebildet ist, die sich entlang der Längsachse (20) erstreckt und durch die ein Befestigungselement (46) zum Verbinden mit dem Fahrzeug oder Fahrzeugelement (14) durchführbar ist.

10. Vorrichtung nach einem der Ansprüche 1 bis 9, **dadurch gekennzeichnet, dass** das Stützteil (12) als Bolzen (50) ausgebildet ist, der mit dem Fahrzeug oder Fahrzeugelement (14) verbindbar ist.

11. Vorrichtung nach einem der Ansprüche 1 bis 10, **dadurch gekennzeichnet, dass** das Dämpfungselement (32) formschlüssig und/oder kraftschlüssig und/oder stoffschlüssig mit dem Halteteil (22) verbunden ist.

12. Vorrichtung nach einem der Ansprüche 1 bis 11, **dadurch gekennzeichnet, dass** das Halteteil (22) und/oder das Dämpfungselement (32) mindestens eine Formschlussöffnung (48) zum Erzeugen einer formschlüssigen Verbindung zwischen dem Halteteil (22) und dem Dämpfungselement (32) aufweist.

13. Vorrichtung nach einem der Ansprüche 1 bis 12, **dadurch gekennzeichnet, dass** das Halteteil (22) als Scheibe (54) und das Stützteil (12) als Buchse und/oder Hülse (56) ausgebildet ist.

14. Vorrichtung nach einem der Ansprüche 1 bis 13, **dadurch gekennzeichnet, dass** das Halteteil (22) in das Stützteil (12) integriert ist.

15. Vorrichtung nach einem der Ansprüche 1 bis 14, **dadurch gekennzeichnet, dass** das Stützteil (12) eine Elastomerschicht (58) aufweist, die zwischen dem Stützteil (12) und dem Anschlagelement (28) angeordnet ist.

16. Fahrzeug oder Fahrzeugelement (14) umfassend eine Vorrichtung (10) nach einem der Ansprüche 1 bis 15, wobei das Stützteil (12) mit dem ersten Endstück (16) an dem Fahrzeug oder Fahrzeugelement (14) angeordnet ist.

17. Fahrzeug nach Anspruch 16, **dadurch gekennzeichnet, dass** das Stützteil (12) an dem Fahrzeug oder Fahrzeugelement (14) ausgebildet ist.

## Claims

1. Mounting device for at least one component in a vehicle, comprising:
- at least one support member (12) for supporting the device (10) on the vehicle or a vehicle element (14), wherein the support member (12) comprises a first end piece (16) and a second end piece (18) which is opposite the first end piece (16) along a longitudinal axis (20) of the support member (12), wherein the support member (12) has, at the second end piece (18), a retaining member (22) for connection to a damping element (32);
- at least one bearing seat (24) for receiving the component, which comprises a connecting region (26) for connection to a stop element (28) and is arranged at a distance from the support member (12) in a direction radial to the longitudinal axis (20);
- at least one stop element (28) arranged in the radial direction between the bearing seat (24) and the support member (12) for providing a stop in any radial direction relative to the longitudinal axis (20) between the support member (12) and the bearing seat (24), which is secured to the connecting region (26) and comprises a stop surface (30) facing the support member (12); and
- at least one damping element (32) for damping vibrations and for decoupling the component from the vehicle;
wherein the stop element (28) is mounted relative to the support member (12) such that it is movable in the radial direction and an axial direction with respect to the longitudinal axis (20) by means of the damping element (32), wherein the connecting region (26) comprises a wall element (34), **characterised in that** the damping element (32) is secured to the stop element (28) and the retaining member (22), wherein the stop element (28) connects the bearing seat (24) and the damping element (32), wherein the damping element (32) is at least partially clamped between the stop element (28) and the wall element (34), wherein the stop element (28) secures the damping element (32) to the bearing seat (24).

2. Device according to claim 1, **characterised in that** the damping element (32) is formed as a moulded elastomer part.

3. Device according to claim 1 or 2, **characterised in that** the wall element (34) extends around the longitudinal axis (20).

4. Device according to any one of claims 1 to 3, **characterised in that** the stop element (28) is arranged between the retaining member (22) and the first end piece (16), wherein the damping element (32) extends on the retaining member (22) away from the stop element (28) and thereafter at least partially in an arc towards the stop element (28).

5. Device according to any one of claims 1 to 4, **characterised in that** the stop element (28) has a first through-opening (36) through which the support member (12) extends and on which the stop surface (30) is arranged.

6. Device according to claim 5, **characterised in that** the damping element (32) comprises a second through-opening (38), wherein the second through-opening (38) is arranged at least partially overlapping the first through-opening (36) and the support member (12) extends through the first through-opening (36) and the second through-opening (38).

7. Device according to any one of claims 1 to 6, **characterised in that** the stop surface (30) comprises at least one rib element (40) directed towards the support member (12) in radial direction.

8. Device according to claim 7, **characterised in that** the rib element (40) comprises a first flattened end region (42) and a second flattened end region (44) and extends parallel to the longitudinal axis (20) between the first flattened end region (42) and the second flattened end region (44).

9. Device according to any one of claims 1 to 8, **characterised in that** the support member (12) is designed as a sleeve which extends along the longitudinal axis (20) and through which a fastening element (46) for connection to the vehicle or vehicle element (14) can be passed.

10. Device according to any one of claims 1 to 9, **characterised in that** the support member (12) is formed as a bolt (50) which is connectable to the vehicle or vehicle element (14).

11. Device according to any one of claims 1 to 10, **characterised in that** the damping element (32) is connected to the retaining member (22) by positive locking and/or friction locking and/or material locking.

12. Device according to any one of claims 1 to 11, **characterised in that** the retaining member (22) and/or the damping element (32) comprises at least one positive-fit opening (48) for creating a positive-fit connection between the retaining member (22) and the damping element (32).

13. Device according to any one of claims 1 to 12, **characterised in that** the retaining member (22) is designed as a disc (54) and the support member (12) as a bushing and/or sleeve (56).

14. Device according to any one of claims 1 to 13, **characterised in that** the retaining member (22) is integrated into the support member (12).

15. Device according to any one of claims 1 to 14, **characterised in that** the support member (12) comprises an elastomer layer (58) arranged between the support member (12) and the stop element (28).

16. Vehicle or vehicle element (14) comprising a device (10) according to any one of claims 1 to 15, wherein the support member (12) is arranged with the first end piece (16) on the vehicle or vehicle component (14).

17. Vehicle according to claim 16, **characterised in that** the support member (12) is formed on the vehicle or vehicle component (14).

## Revendications

1. Dispositif de support pour au moins un composant dans un véhicule, comprenant:
- au moins un élément de support (12) destiné à soutenir le dispositif (10) sur le véhicule ou sur un élément de véhicule (14), l'élément de support (12) comportant une première extrémité (16) et une deuxième extrémité (18) qui est opposée à la première extrémité (16) le long d'un axe longitudinal (20) de l'élément de support (12), l'élément de support (12) comportant, au niveau de la deuxième extrémité (18), un élément de retenue (22) destiné à être relié à un élément d'amortissement (32);
- au moins un logement de palier (24) destiné à recevoir le composant, qui comporte une zone de liaison (26) destinée à être reliée à un élément de butée (28) et qui est disposé à distance de l'élément de support (12) dans une direction radiale par rapport à l'axe longitudinal (20);
- au moins un élément de butée (28) disposé dans la direction radiale entre le logement de palier (24) et l'élément de support (12) pour assurer une butée dans chaque direction radiale par rapport à l'axe longitudinal (20) entre l'élément de support (12) et le logement de palier (24), qui est fixé à la zone de liaison (26) et comprend une surface de butée (30) tournée vers l'élément de support (12); et
- au moins un élément d'amortissement (32) destiné à amortir les vibrations et à découpler le composant du véhicule;
l'élément de butée (28) étant monté par rapport à l'élément de support (12) de manière à pouvoir se déplacer dans la direction radiale et dans une direction axiale par rapport à l'axe longitudinal (20) au moyen de l'élément d'amortissement (32), la zone de liaison (26) comportant un élément de paroi (34), **caractérisé en ce que** l'élément d'amortissement (32) est fixé à l'élément de butée (28) et à l'élément de retenue (22), l'élément de butée (28) reliant le logement de palier (24) et l'élément d'amortissement (32), l'élément d'amortissement (32) étant au moins partiellement serré entre l'élément de butée (28) et l'élément de paroi (34), l'élément de butée (28) fixant l'élément d'amortissement (32) au logement de palier (24).

2. Dispositif selon la revendication 1, **caractérisé en ce que** l'élément d'amortissement (32) est réalisé sous la forme d'une pièce moulée en élastomère.

3. Dispositif selon la revendication 1 ou 2, **caractérisé en ce que** l'élément de paroi (34) s'étend autour de l'axe longitudinal (20).

4. Dispositif selon l'une des revendications 1 à 3, **caractérisé en ce que** l'élément de butée (28) est disposé entre l'élément de retenue (22) et la première extrémité (16), l'élément d'amortissement (32) s'étendant sur l'élément de retenue (22) en s'éloignant de l'élément de butée (28), puis au moins partiellement en formant un arc vers l'élément de butée (28).

5. Dispositif selon l'une des revendications 1 à 4, **caractérisé en ce que** l'élément de butée (28) présente une première ouverture de passage (36) à travers laquelle s'étend l'élément de support (12) et sur laquelle est disposée la surface de butée (30).

6. Dispositif selon la revendication 5, **caractérisé en ce que** l'élément d'amortissement (32) comporte une deuxième ouverture de passage (38), la deuxième ouverture de passage (38) étant disposée de manière à chevaucher au moins partiellement la première ouverture de passage (36) et l'élément de support (12) s'étendant à travers la première ouverture de passage (36) et la deuxième ouverture de passage (38).

7. Dispositif selon l'une des revendications 1 à 6, **caractérisé en ce que** la surface de butée (30) comporte au moins un élément nervuré (40) qui est orienté dans la direction radiale vers l'élément de support (12).

8. Dispositif selon la revendication 7, **caractérisé en ce que** l'élément nervuré (40) comporte une première zone d'extrémité aplatie (42) et une deuxième zone d'extrémité aplatie (44) et s'étend parallèlement à l'axe longitudinal (20) entre la première zone d'extrémité aplatie (42) et la deuxième zone d'extrémité aplatie (44).

9. Dispositif selon l'une des revendications 1 à 8, **caractérisé en ce que** l'élément de support (12) est réalisé sous la forme d'un manchon qui s'étend le long de l'axe longitudinal (20) et à travers lequel un élément de fixation (46) destiné à être relié au véhicule ou à l'élément de véhicule (14) peut être introduit.

10. Dispositif selon l'une des revendications 1 à 9, **caractérisé en ce que** l'élément de support (12) est réalisé sous la forme d'un boulon (50) pouvant être relié au véhicule ou à l'élément de véhicule (14).

11. Dispositif selon l'une des revendications 1 à 10, **caractérisé en ce que** l'élément d'amortissement (32) est relié à l'élément de retenue (22) par complémentarité de forme et/ou par adhérence et/ou par liaison par friction.

12. Dispositif selon l'une des revendications 1 à 11, **caractérisé en ce que** l'élément de retenue (22) et/ou l'élément d'amortissement (32) comporte au moins une ouverture à engagement positif (48) pour créer une liaison par engagement positif entre l'élément de retenue (22) et l'élément d'amortissement (32).

13. Dispositif selon l'une des revendications 1 à 12, **caractérisé en ce que** l'élément de retenue (22) est réalisé sous la forme d'un disque (54) et l'élément de support (12) sous la forme d'une douille et/ou d'un manchon (56).

14. Dispositif selon l'une des revendications 1 à 13, **caractérisé en ce que** l'élément de retenue (22) est intégré dans l'élément de support (12).

15. Dispositif selon l'une des revendications 1 à 14, **caractérisé en ce que** l'élément de support (12) comporte une couche d'élastomère (58) disposée entre l'élément de support (12) et l'élément de butée (28).

16. Véhicule ou élément de véhicule (14) comprenant un dispositif (10) selon l'une des revendications 1 à 15, dans lequel l'élément de support (12) est disposé avec la première extrémité (16) sur le véhicule ou l'élément de véhicule (14).

17. Véhicule selon la revendication 16, **caractérisé en ce que** l'élément de support (12) est formé sur le véhicule ou l'élément de véhicule (14).
